# EUROPÄISCHE PATENTSCHRIFT

(11) **EP 0 818 169 B1**
(45) Veröffentlichungstag und Bekanntmachung des Hinweises auf die Patenterteilung: **08.05.2002**
(21) Anmeldenummer: 97110909.5
(22) Anmeldetag: 02.07.1997
(51) Int. Cl.: A47J 39/00

(54) **Speisetablett**
Food tray
Plateau pour nourriture

(30) Priorität: 09.07.1996 DE 19627522
(43) Veröffentlichungstag der Anmeldung: 14.01.1998
(73) Patentinhaber: ETOL Vertriebs GmbH, 77728 Oppenau (DE)
(72) Erfinder: Söllner-Tripp, Hanspeter, 77704 Oberkirch (DE); Wolf, Eckert, 77704 Oberkirch (DE)
(74) Vertreter: Lasch, Hartmut Dipl.-Ing.

(56) Entgegenhaltungen:
- EP-A- 0 285 552
- EP-A- 0 591 760
- DE-U- 9 213 948
- DE-U- 9 420 946
- DE-U- 29 612 514
- FR-A- 2 738 136

## Beschreibung

Die Erfindung betrifft ein Speisetablett mit zumindest einer Mulde zur Aufnahme eines Geschirrteils, wobei unterhalb zumindest einer Mulde eine Induktionsspule angeordnet ist und wobei eine Kupplung vorgesehen ist, über die die Induktionsspule an eine Stromquelle ausschließbar ist.

In Krankenhäusern, Altenheimen oder ähnlichen Einrichtungen, in denen die Speisen an die Patienten oder Bewohner verteilt werden, ist es notwendig, ein übermäßiges Abkühlen der Speisen während des Transportes von der Küche bis zum Abnehmer zu verhindern. Während früher aus diesem Grund überwiegend versucht wurde, die Transportbehältnisse oder -wagen möglichst gut zu isolieren, um einen zu starken Wärmeverlust zu vermeiden, ist es mittlerweile üblich, die Transportwagen mit Erwärmvorrichtungen zu versehen. Da auf einem Speisetablett neben warmen Speisen jedoch auch häufig kalte Speisen angeordnet sind, die in dem Speisetablett-Transportwagen nicht erwärmt werden dürfen, findet in der Regel eine selektive Erwärmung nur der warmen Speisen statt.

Wie die EP 0 591 760 A1 zeigt, kann eine derartige selektive Erwärmung dadurch erreicht werden, daß mit Hilfe von in die Regalböden des Transportwagens integrierten Induktionsspulen, die von einem Wechselstrom durchflossen sind, ein elektromagnetisches Wechselfeld erzeugt wird. Das Geschirr oder das Behältnis, auf dem die warmzuhaltenden Speisen liegen, ist zumindest teilweise elektrisch leitend ausgestaltet, indem es beispielsweise mit einer elektrisch leitenden Beschichtung versehen ist. Wenn das Geschirr oder Behältnis auf einen Regalboden des Transportwagens gestellt wird und dabei in das elektromagnetische Wechselfeld gelangt, wird ein Induktionsstrom induziert, der zur Erwärmung des Geschirrs und der darauf befindlichen Speisen führt. Die kalten Speisen, die auf einem nicht leitenden Geschirr angeordnet sind, erfahren dabei keine Erwärmung.

EP-A-285 552 zeigt einähnliches system.

Obwohl sich der Einsatz derartiger Transportwagen in den Fällen, in denen die Speisen nur innerhalb eines Hauses zu verteilen sind, durchaus bewährt hat, treten bei der Verteilung von Speisen durch Belieferung verschiedener Haushalte Probleme auf, da dabei die Speisen in Kraftfahrzeugen nacheinander an verschiedenen, teilweise relativ weit auseinanderliegenden Orten ausgeliefert werden müssen. Da die Ausrüstung der Kraftfahrzeuge mit Regalen entsprechend der bekannten Speise-Transportwagen sehr aufwendig und teuer wäre, werden die Speisen für die Belieferung von Haushalten weiterhin zentral erwärmt, in verschiedenen Geschirrteilen auf Speisetabletts zu Menüs zusammengestellt und dann in Wärme-Isolierbehältern verpackt. Im Laufe der Zeit kühlen die Speisen jedoch auch in den Isolierbehältern ab, so daß sie zum Verzehr aus den Geschirrteilen entnommen und nochmals aufgewärmt werden müssen, was jedoch sehr aufwendig und mühselig ist. Darüber hinaus ist mit diesem Vorgehen üblicherweise auch ein deutlicher Verlust hinsichtlich der Qualität und des Geschmacks der Speisen verbunden.

Aus der DE 90 05 920 U1 ist ein Speisebehälter mit einem äußeren Gehäuse bekannt, das eine Ausnehmung besitzt, in die ein Edelstahlbehälter eingesetzt werden kann. Im Boden des Gehäuses ist unterseitig eine Vertiefung ausgebildet, in die bei Bedarf eine Induktionsspule lösbar eingesetzt werden kann, so daß die im Edelstahlbehälter befindlichen Speisen erwärmt werden können. Hierbei ist jedoch der Nachteil vorhanden, daß einerseits der Abstand zwischen der Induktionsspule und dem Edelstahlbehälter relativ groß ist, so daß eine Induktionsspule sehr großer Leistung verwendet werden muß, um die Speisen zu erwärmen. Andererseits ist die Induktionsspule frei zugänglich, wodurch insbesondere bei längerem Gebrauch die Gefahr einer Beschädigung der Induktionsspule besteht.

Der Erfindung liegt die Aufgabe zugrunde, die genannten Nachteile zu überwinden und ein Speisetablett zu schaffen, das über eine lange Zeit eine wirkungsvolle Erwärmung von Speisen gewährleistet.

Diese Aufgabe wird erfindungsgemäß bei einem Speisetablett dadurch gelöst, daß das Speisetablett einen mehrschichtigen Sandwichaufbau aufweist, wobei die Induktionsspule in das Material einer mittleren Schicht vollständig eingebettet ist.

Erfindungsgemäß wird somit von der Erwärmung bzw. Warmhaltung der Speisen mittels eines in einem elektromagnetischen Wechselfeld induzierten Induktionsstroms Gebrauch gemacht, jedoch ist die dazu notwendige Induktionsspule direkt in das Speisetablett fest integriert und von diesem geschützt. Die ebenfalls in das Speisetablett integrierte Kupplung für den Anschluß an eine Stromquelle erlaubt es, die Induktionsspule an verschiedenen Orten an eine jeweilige Stromquelle anzuschließen. So kann beispielsweise in dem Kraftfahrzeug, mit dem die Speisen ausgeliefert werden, ein entsprechender Stromanschluß vorgesehen werden, so daß die Speisen auch während des Transportes einer ständigen Erwärmung unterliegen, soweit sie auf einem Geschirrteil mit einer metallischen Beschichtung angeordnet sind. Vorzugsweise ist jedoch vorgesehen, daß beim Entabnehmer der Speisen eine entsprechende Stromquelle vorhanden ist, an die das Speisetablett angeschlossen werden kann. Dies ermöglicht es, die Speisen auch nach der Auslieferung über einen längeren Zeitraum in einfacher Weise warm zu halten und/oder bei Bedarf in schonender Weise zu erwärmen. Darüber hinaus ist es möglich, vorgekochte Speisen in kaltem Zustand auszuliefern und diese erst unmittelbar vor dem Verzehr beim Endverbraucher zu erwärmen.

Die Einbettung der Induktionsspule in einer mittleren Schicht des Sandwichaufbaus bringt neben der Schutzwirkung den weiteren Vorteil mit sich, daß der Abstand zwischen der Induktionsspule und dem in der Mulde des Speisetabletts angeordneten Geschirrteil relativ gering ist, so daß bereits eine Induktionsspule geringer Leistung ausreicht, um die Speisen in dem Geschirrteil zu erwärmen.

In bevorzugter Ausgestaltung der Erfindung ist vorgesehen, daß das Speisetablett einen drei-schichtigen Sandwichaufbau mit einer mittleren Schicht und außenseitigen Deckschichten aufweist, wobei die Induktionsspule in der mittleren Schicht angeordnet ist und von deren Material vorzugsweise vollständig umschlossen und festgelegt ist. Während das Material der mittleren Schicht die Induktionsspule allseitig schützt und insbesondere in gewünschter Soll-Position hält, sorgen die äußeren Deckschichten für eine hohe mechanische Festigkeit des Speisetabletts insbesondere gegen Schlagbeanspruchungen.

Die beiden Deckschichten bestehen vorzugsweise aus einem thermoplastischen Kunststoff, insbesondere Polypropylen, einem kaschierten ABS oder einem Polycarbonat. Die mittlere Schicht, in die die Induktionspule eingebettet ist, kann beispielsweise aus einem thermoplastischen Kunststoff-Schaum oder einem Polyuretan-Schaum bestehen.

Da die Speisetabletts üblicherweise maschinell gereinigt werden, muß vorgesehen sein, daß die Kupplung, über die die Induktionsspule an die Stromquelle anschließbar ist, wasserdicht ist und den hygienischen Anforderungen genügt.

Üblicherweise werden die Speisetabletts, nachdem die Geschirrteile in die entsprechenden Mulden eingestellt sind, mit einem Deckel überdeckt, der einerseits wärmeisolierend wirkt und andererseits das Eindringen von Fremdkörpern verhindert. Derartige Deckel sind bekannt und lassen sich in einfacher Weise auf das Speisetablett aufsetzen. Vorzugsweise besitzt der Deckel Ausnehmungen, die entsprechend den Mulden des Speisetabletts angeordnet sind.

Wenn das Speisetablett mit eingebetteter Induktionsspule beim Endverbraucher an eine Stromquelle angeschlossen wird, können sich Wirbelstromfelder bilden, die in Ausnahmefällen bei Trägern von Herzschrittmachern oder anderen, elektromagnetisch sensiblen Geräten zu Problemen führen können. Aus diesem Grund ist der Deckel erfindungsgemäß mit einer elektromagnetischen Abschirmung versehen. Die Abschirmung kann darin bestehen, daß der Deckel entweder aus Metall, insbesondere Aluminium oder VA-Stahl besteht, alternativ ist es jedoch auch möglich, den Deckel zumindest abschnittsweise mit einer metallischen Beschichtung, beispielsweise aus den genannten Materialien zu versehen. In bevorzugter Ausgestaltung sind die Ausnehmungen des Deckels innenseitig mit einer entsprechenden Aluminium-Beschichtung versehen, zumindest soweit sie Mulden mit einer Induktionsspule zugeordnet ist.

Der Deckel kann, nachdem er auf das Speisetablett aufgesetzt ist, mit einem Bügel auf dem Speisetablett festgespannt werden. Der Bügel weist vorzugsweise einen Haken auf, der mit einem Hinterschnitt des Speisetabletts lösbar in Eingriff gebracht werden kann. Auf diese Weise ist verhindert, daß der Deckel in unbeabsichtigter Weise während des Transportes von dem Speisetablett herunterfällt oder während der Aktivierung der Induktionsspule abgenommen wird.

Um das mit Deckel versehene Speisetablett zu transportieren, ist in bevorzugter Ausgestaltung der Erfindung vorgesehen, einen Stapel aus mehreren mit Deckel versehenen Speisetabletts in einen entsprechenden Tragbügel einzusetzen und somit als Transporteinheit zu verwenden. Es hat sich bewährt, wenn der Tragbügel zwei am oberen Ende gelenkig miteinander verbundene Rahmenteile aufweist, die am unteren Ende jeweils Aufstandsflächen für den Stapel der Speisetabletts besitzen.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: eine perspektivische Ansicht des Speisetabletts mit Deckel in Netzliniendarstellung,
- Figur 2: einen Querschnitt durch ein Speisetablett mit aufgesetztem Deckel,
- Figur 3: den mehrschichtigen Aufbau des Speisetabletts in schematischer Darstellung,
- Figur 4: eine teilweise geschnitten dargestellte Ansicht eines Stapels mehrerer mit Deckel versehener Speisetabletts und eines Handgriffs,
- Figur 5: ein Detail aus Figur 4,
- Figur 6: eine Seitenansicht eines Stapels mehrerer Speisetabletts mit einem Tragbügel und
- Figur 7: eine Seitenansicht des Stapels gemäß Figur 6.

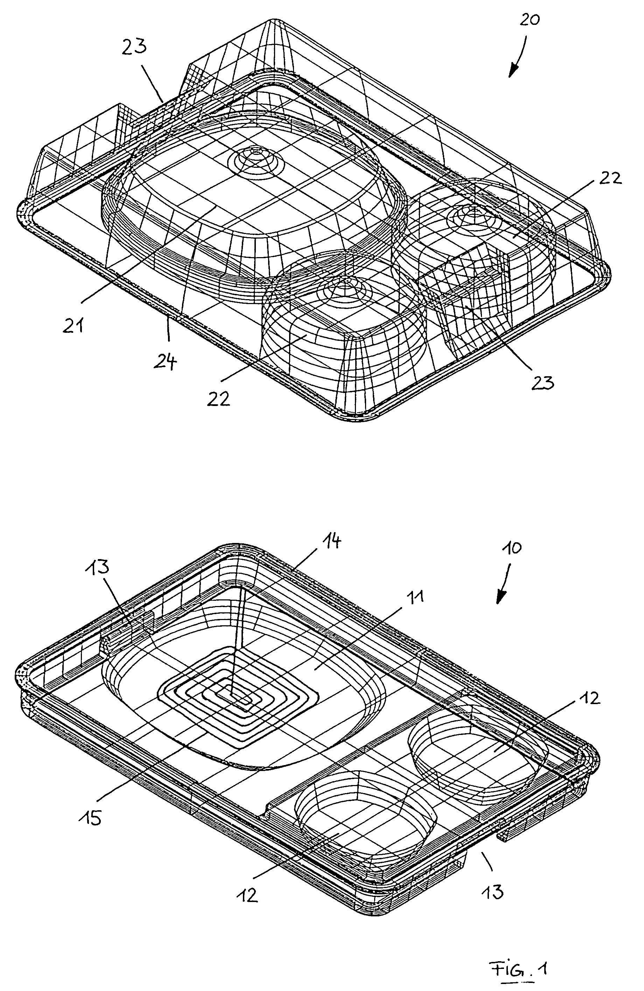

Ein in der unteren Hälfte der Figur 1 dargestelltes Speisetablett 10, das aus Kunststoff besteht, weist an seiner Oberseite eine relativ große Mulde 11 zur Aufnahme beispielsweise eines Tellers sowie zwei kleine Mulden 12 zur Aufnahme von Suppen- oder Dessertschälchen auf. An seinen gegenüberliegenden schmalen Seiten ist das Speisetablett 10 in bekannter Weise mit als Handgriff nutzbaren Einbuchtungen versehen. Unterhalb der Bodenfläche der Mulde 11 ist eine Induktionsspule 15 in das Material des Speisetabletts eingebettet, deren Anschlußleitungen zu einer nicht näher dargestellten Kupplung führen, über die die Induktionsspule 15 an eine Stromquelle, vorzugsweise eine Wechselstromquelle anschließbar ist.

Auf der Oberseite besitzt das Speisetablett 10 einen umlaufenden Rand 14, der als Auflager eines im oberen Teil der Figur 1 dargestellten Deckels 20 dient. Der Deckel 20 besitzt zu diesem Zweck auf seiner Unterseite einen umlaufenden Rand 24, der mit dem Rand 14 des Speisetabletts 10 in Anlage gebracht werden kann.

Auf seiner dem Speisetablett 10 zugewandten Unterseite sind im Deckel mehrere, entsprechend den Mulden 11 und 12 des Speisetabletts 10 angeordnete Ausnehmungen 21 und 22 ausgebildet. Des weiteren besitzt auch der Deckel 20 an seinen entgegengesetzten schmalen Seiten angeformte Griffteile 23.

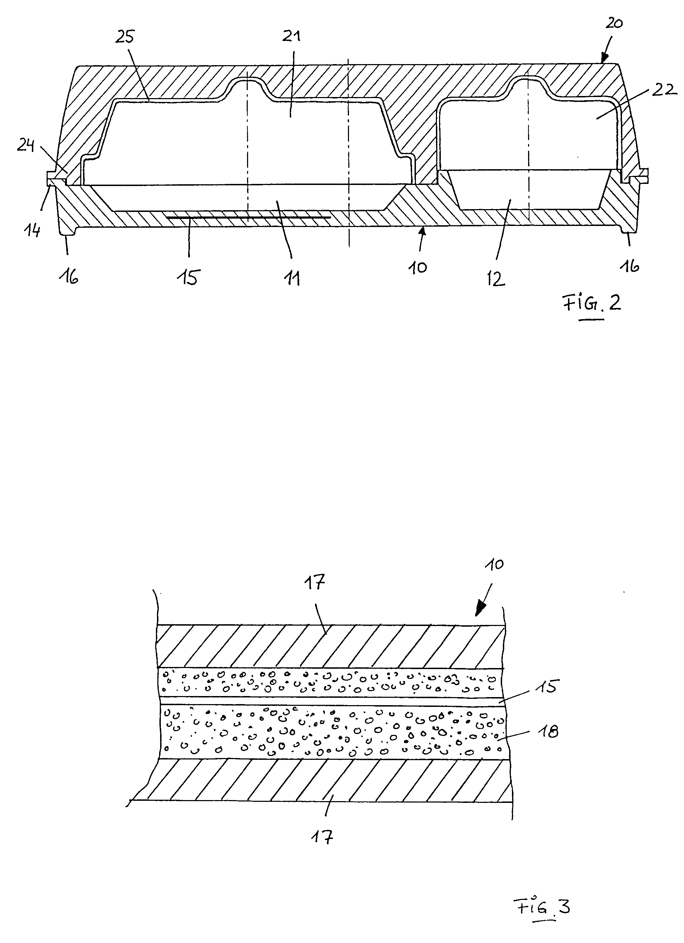

Figur 2 zeigt das Speisetablett 10 mit aufgesetztem Deckel 20, wobei deutlich wird, daß das Speisetablett 10 auf seiner Unterseite einen umlaufenden, nach unten vorstehenden Rand 16 besitzt, der einerseits als Fußteil zur Auflagerung auf einer Ablagefläche und andererseits zur Fixierung des Speisetabletts in einem Stapel mehrerer mit Deckel versehener Speisetabletts dient. Wie die Figur 2 des weiteren zeigt, sind die im Deckel ausgebildeten Ausnehmungen 21 und 22 innenseitig mit einer Aluminium-Beschichtung 25 versehen, die als Abschirmung gegen elektromagnetische Felder dient, wenn die Induktionsspule 15 von einem Strom durchflossen ist.

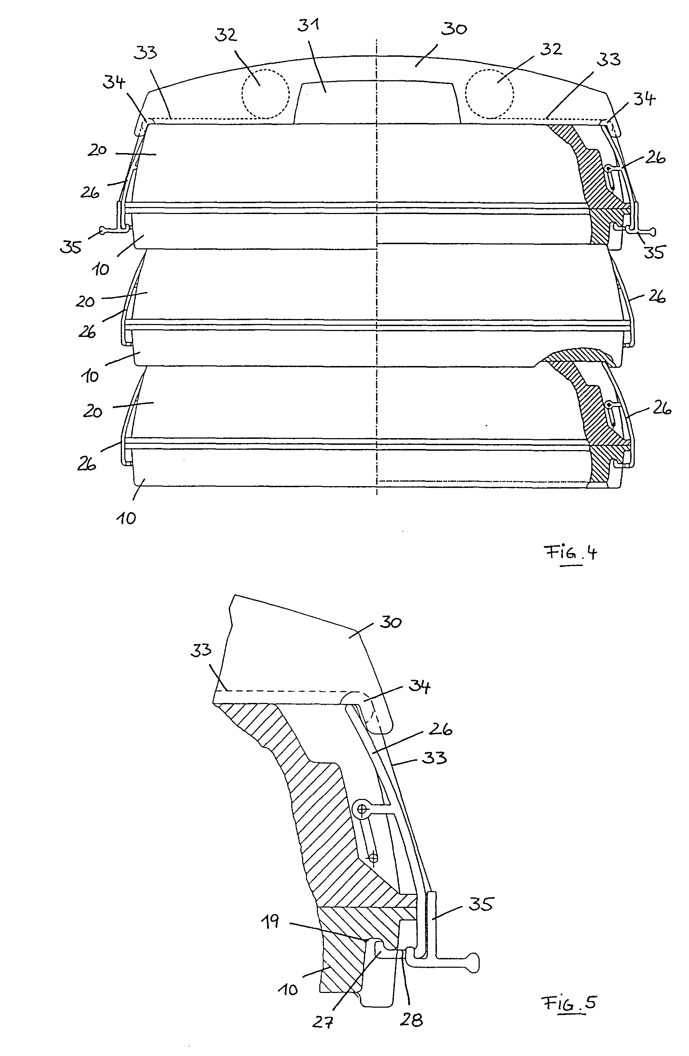

In Figur 3 ist der Aufbau des Speisetabletts 10 schematisch dargestellt. Das Speisetablett 10 besitzt dabei einen drei-schichtigen Sandwichaufbau mit jeweils einer äußeren Deckschicht 17, die aus einem thermoplastischen Kunststoff, insbesondere Polypropylen besteht. Die mittlere Schicht 18, in die die Induktionsspule 15 vollständig eingebettet ist, besteht aus einem thermoplastischen Kunststoff- Schaum oder einem Polyuretanschaum.

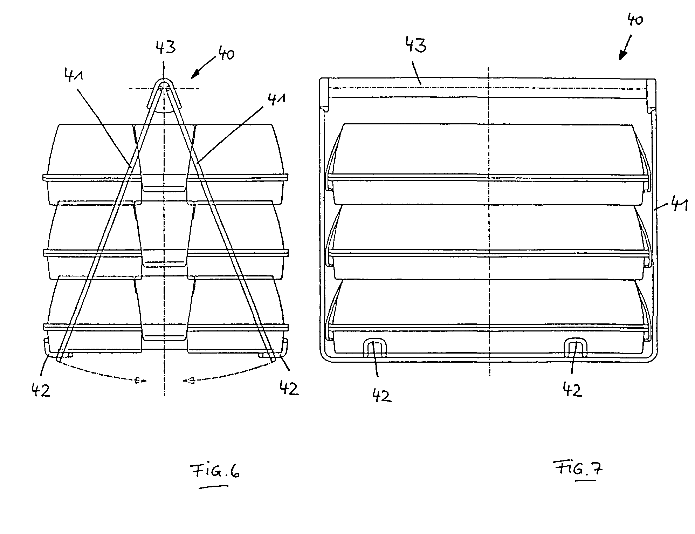

Die Figuren 4 und 5 zeigen die Stapelbarkeit mehrerer mit Deckel 20 versehener Speisetabletts 10. Um den Deckel 20 am Speisetablett 10 festzuklemmen, ist am Deckel 20 ein Klemmbügel 26 vorgesehen, der an seinem unteren Ende zu einem Haken 27 geformt ist, mit dem er in eine am Speisetablett 10 ausgebildete Hinterschneidung 19 eingreifen kann.

Wie insbesondere Figur 4 zeigt, ist die lichte Weite des auf der Unterseite des Speisetabletts 10 ausgebildeten umlaufenden vorstehenden Randes 16 an die Abmessungen der Oberseite des Deckels 20 derart angepaßt, daß der Rand 16 bei gestapelten, mit Deckel versehenen Tabletts 10 den Deckel des jeweils darunter liegenden Tabletts unter engem Spiel umgreift, so daß die einzelnen gestapelten Teile senkrecht zu ihrer Stapelrichtung relativ zueinander fixiert sind.

Auf den in Figur 4 dargestellten Stapel von drei Speisetabletts 10 mit entsprechenden Deckeln 20 kann ein Handgriff 30 aufgesetzt werden, der ebenfalls die Oberseite des oberen Deckels 20 des Stapels formschlüssig umgreift. In dem Handgriff 30 ist eine Griffausnehmung 31 ausgebildet, an der ein Benutzer den Handgriff erfassen kann. Am Handgriff sind auf entgegengesetzten Seiten jeweils Haken 35 vorgesehen, die am freien Ende eines Seils 33 angeordnet sind, das unter Vorspannung einer in einem Federzug 32 im Handgriff 30 angeordneten Feder steht. Der Benutzer kann zur Montage des Handgriffs 30 den Haken 35 entgegen der Kraft der Feder des Federzugs 32 herausziehen, wobei das Seil 33 über eine Umlenkrolle 34 verläuft. Der Haken 35 kann dann in ein Eingriffsloch 28 am Bügel 26 des jeweils unteren Speisetabletts des Stapels eingehakt werden.

Zur Demontage des Handgriffs muß lediglich der Haken 35 aus seinem Eingriff im Eingriffsloch 28 gelöst werden, woraufhin er durch die Federkraft in den Handgriff 30 eingezogen wird.

Eine alternative Ausgestaltung zum Transport eines Stapels von mit Deckel versehenen Speisetabletts ist in den Figuren 6 und 7 dargestellt. Dabei handelt es sich um einen Tragbügel 40, der aus zwei Rahmenteilen 41 besteht, die am oberen Ende gelenkig verbunden sind, wobei das Gelenk von einem Schutzüberzug 43 umgeben ist, der gleichzeitig den Handgriff des Tragbügels bildet. An ihrem unteren Ende besitzen die Tragbügel 41 jeweils zwei im Abstand angeordnete Aufstandswinkel 42, die mit dem unteren Speisetablett des Stapels außen- und unterseitig in Anlage kommen. Wenn der Tragbügel 40 an dem Handgriff 43 angehoben wird, möchten die beiden Rahmenteile 41 eine aufeinander zu gerichtete Schwenkung ausführen, wie durch die Pfeile in Figur 6 angedeutet ist. Eine derartige Bewegung ist jedoch durch die Aufstandswinkel 42 verhindert, die sich an dem unteren Speisetablett anlegen. Auf diese Weise ist eine Verspannung des Tragbügels 40 bzw. der Rahmenteile 41 mit dem Stapel erreicht, so daß dieser sicher transportiert werden kann.

## Patentansprüche

1. Speisetablett (10) mit zumindest einer Mulde (11, 12) zur Aufnahme eines Geschirrteils, wobei unterhalb zumindest einer Mulde eine Induktionsspule (15) angeordnet ist und wobei eine Kupplung vorgesehen ist, über die die Induktionsspule (15) an eine Stromquelle anschließbar ist, **dadurch gekennzeichnet, daß** das Speisetablett (10) einen mehr-schichtigen Sandwichaufbau aufweist, wobei die Induktionsspule (15) in das Material einer mittleren Schicht (18) vollständig eingebettet ist.

2. Speisetablett nach Anspruch 1, **dadurch gekennzeichnet, daß** das Speisetablett (10) einen drei-schichtigen Sandwichaufbau mit einer mittleren Schicht (18) und außenseitigen Deckschichten (17) besitzt.

3. Speisetablett nach Anspruch 1 oder 2, **dadurch gekennzeichnet, daß** die Induktionsspule (15) von dem Material der mittleren Schicht (18) vollständig umschlossen und festgelegt ist.

4. Speisetablett nach Anspruch 2 oder 3, **dadurch gekennzeichnet, daß** die Deckschichten (17) aus einem thermoplastischen Polypropylen, einem kaschierten ABS oder einem Polycarbonat bestehen.

5. Speisetablett nach Anspruch 3 oder 4, **dadurch gekennzeichnet, daß** die mittlere Schicht (18) aus einem thermoplastischen Kunststoff-Schaum oder einem Polyurethan-Schaum besteht.

6. Speisetablett nach einem der Ansprüche 1 bis 5, **gekennzeichnet durch** einen auf das Speisetablett (10) aufsetzbaren Deckel (20) mit entsprechend den Mulden (11, 12) des Speisetabletts (10) angeordneten Ausnehmungen (21, 22).

7. Speisetablett nach Anspruch 6, **dadurch gekennzeichnet, daß** der Deckel (20) zumindest abschnittsweise aus Metall besteht oder metallisch beschichtet ist.

8. Speisetablett nach Anspruch 6 oder 7, **dadurch gekennzeichnet, daß** die Ausnehmungen (21, 22) des Deckels (20) innenseitig mit einer Aluminium-Beschichtung (25) versehen sind.

9. Speisetablett nach einem der Ansprüche 6 bis 8, **dadurch gekennzeichnet, daß** der Deckel (20) über einen Bügel (26) formschlüssig auf dem Speisetablett (10) festspannbar ist.

10. Speisetablett nach Anspruch 9, **dadurch gekennzeichnet, daß** der Bügel (26) einen Haken (27) aufweist, der mit einem Hinterschnitt (19) des Speisetabletts (10) lösbar in Eingriff bringbar ist.

## Claims

1. Food tray (10) with at least one depression (11, 12) for receiving a utensil part and below at least one depression is provided an induction coil (15), a coupling being provided by means of which the induction coil (15) can be connected to a power supply, **characterized in that** the food tray (10) has a multilayer sandwich structure, the induction coil (15) being completely embedded in the material of a central layer (18).

2. Food tray according to claim 1, **characterized in that** the food tray (10) has a three-layer sandwich structure with a central layer (18) and external covering layers (17).

3. Food tray according to claim 1 or 2, **characterized in that** the induction coil (15) is completely surrounded and fixed by the material of the central layer (18).

4. Food tray according to claim 2 or 3, **characterized in that** the covering layers (17) are made from a thermoplastic polypropylene, a coated ABS or a polycarbonate.

5. Food tray according to claim 3 or 4, **characterized in that** the central layer (18) is made from a thermoplastic foam or a polyurethane foam.

6. Food tray according to one of the claims 1 to 5, **characterized by** a cover (20) mountable on the food tray (10) and having recesses (21, 22) corresponding to the depressions (11, 12) of the food tray (10).

7. Food tray according to claim 6, **characterized in that** the cover (20) is at least zonally made from metal or has a metallic coating.

8. Food tray according to claim 6 or 7, **characterized in that** the recesses (21, 22) of the cover (20) are internally provided with an aluminium coating (25).

9. Food tray according to one of the claims 6 to 8, **characterized in that** the cover (20) can be fixed in positive manner to the food tray (10) by means of a clip (26).

10. Food tray according to claim 9, **characterized in that** the clip (26) has a hook (27), which can be detachably engaged with an undercut (19) of the food tray (10).

## Revendications

1. Plateau-repas (10) présentant au moins une cavité (11,12) pour recevoir une pièce de vaisselle, dans lequel une self (15) est disposée sous au moins une cavité et dans lequel est prévu un prolongateur permettant de relier la self (15) à une source de courant, **caractérisé en ce que** le plateau-repas (10) présente une constitution en sandwich à plusieurs couches, dans laquelle la self (15) est entièrement noyée dans le matériau d'une couche médiane (18).

2. Plateau-repas selon la revendication 1, **caractérisé en ce que** le plateau-repas (10) présente une constitution en sandwich à trois couches comportant une couche médiane (18) et des couches extérieures de couverture (17).

3. Plateau-repas selon la revendication 1 ou 2, **caractérisé en ce que** la self (15) est entièrement entourée et maintenue par le matériau de la couche médiane (18).

4. Plateau-repas selon la revendication 2 ou 3, **caractérisé en ce que** les couches de recouvrement (17) sont réalisées dans un polypropylène thermoplastique, un ABS stratifié ou un polycarbonate.

5. Plateau-repas selon la revendication 3 ou 4, **caractérisé en ce que** la couche médiane (18) consiste en une mousse synthétique thermoplastique ou une mousse de polyuréthane.

6. Plateau-repas selon l'une quelconque des revendications 1 à 5, **caractérisé par** un couvercle (20) qui peut être posé sur le plateau-repas (10) et présente des évidements (21,22) disposés de manière à correspondre aux cavités (11,12) du plateau-repas (10).

7. Plateau-repas selon la revendication 6, **caractérisé en ce que** le couvercle (20) présente au moins certaines zones en métal ou est recouvert de métal.

8. Plateau-repas selon la revendication 6 ou 7, **caractérisé en ce que** les évidements (21,22) du couvercle (20) sont recouverts à l'intérieur d'un revêtement (25) en aluminium.

9. Plateau-repas selon l'une quelconque des revendications 6 à 8, **caractérisé en ce que** le couvercle (20) peut être bloqué sur le plateau-repas par resserrement à ajustement de forme au moyen d'une attache (26).

10. Plateau-repas selon la revendication 9, **caractérisé en ce que** l'attache (26) présente un crochet (27) pouvant être mis en prise de manière détachable dans une contre-dépouille (19) du plateau-repas (10).
